# FASCICULE DE BREVET EUROPEEN

(11) **EP 2 859 960 B1**
(45) Date de publication et mention de la délivrance du brevet: **21.03.2018**
(21) Numéro de dépôt: 14188254.8
(22) Date de dépôt: 09.10.2014
(51) Int. Cl.: B05B 1/28, B05B 15/04, B05B 12/12, B05B 15/12, B05B 13/00

(54) **Procédé de conditionnement de la surface d'un objet et ensemble pour sa mise en oeuvre**
Verfahren zur Aufbereitung der Oberfläche eines Gegenstands, und Vorrichtung zur Umsetzung dieses Verfahrens
Method for conditioning the surface of an object and assembly for implementing same

(30) Priorité: 09.10.2013 FR 1359779
(43) Date de publication de la demande: 15.04.2015
(73) Titulaire: Airbus Group SAS, 75016 Paris (FR); Airbus Operations (S.A.S.), 31060 Toulouse (FR)
(72) Inventeur: Rives, Bertrand, 31300 Toulouse (FR); Hormiere, Arnaud, 31100 Toulouse (FR)
(74) Mandataire: Ipside

(56) Documents cités:
- WO-A2-01/34309
- GB-A- 1 376 695
- US-A1- 2013 119 155
- US-A1- 2013 243 963
- US-B1- 6 390 898

## Description

### ARRIERE-PLAN DE L'INVENTION

### Domaine de l'invention

La présente invention concerne un procédé et un ensemble de conditionnement de la surface d'un objet tel qu'une cellule d'aéronef (avions, hélicoptères, fusées, satellites), un navire ou un bâtiment.

### Arrière-plan technologique

Après la phase d'assemblage final d'un aéronef, il est connu de recouvrir la surface de cet aéronef d'une ou plusieurs couches de peinture, qu'il est nécessaire de maintenir en état en raison de leur contribution à la protection et à la customisation de la surface de l'aéronef.

Pour cela, l'aéronef est placé dans un hangar pour recevoir plusieurs couches de revêtements, notamment une couche d'accrochage, une couche anti-corrosion, puis les couleurs de la compagnie aérienne exploitante et un vernis de protection.

La durée d'exploitation d'un aéronef étant longue, un aéronef peut faire l'objet de plusieurs mises en peinture d'une ou plusieurs parties de sa surface, par exemple, suite à des réparations.

Ces opérations de mise en peinture de l'aéronef sont généralement longues, immobilisant l'aéronef pour plusieurs jours et, par conséquent, coûteuses.

Par ailleurs, il est connu que la température de surface de l'objet à peindre ainsi que l'hygrométrie ambiante jouent un rôle important sur le temps nécessaire pour réaliser cette mise en peinture ainsi que sur la qualité du revêtement obtenu.

Des retardateurs de peinture peuvent ainsi être mis en oeuvre lorsque la température ambiante est élevée ou que l'air ambiant est humide. Alternativement, des accélérateurs peuvent être mis en oeuvre lorsque les températures sont trop basses.

Pour simplifier les opérations de mise en peinture d'un aéronef et s'assurer de la qualité des divers revêtements, on a donc cherché à contrôler la température et l'hygrométrie dans le volume intérieur du hangar dans lequel l'aéronef à peindre est placé.

Aujourd'hui, le maintien de la température, de l'hygrométrie et du flux d'air est assuré à l'échelle de l'ensemble du hangar à travers des systèmes de soufflerie d'air à atmosphère et température contrôlés.

Le contrôle est, pour sa part, assuré par des capteurs de température et d'hygrométrie positionnés en différents points du hangar de manière à assurer une vision globale des conditions régnant dans le hangar.

Toutefois, une telle méthode de contrôle ne permet pas d'optimiser la consommation d'énergie nécessaire au maintien en atmosphère à la surface de l'aéronef sur laquelle les revêtements doivent être déposés.

De plus, cette méthode constitue un frein au développement et à la mise en oeuvre de machines de dépose de revêtements automatisées.

De telles machines devraient, par ailleurs, répondre aux différentes contraintes de production d'un aéronef :
- conditions opérationnelles: fiabilité, flexibilité et robustesse, faiblement énergivore, forte capacité d'extraction de gaz pollué ou non,
- conditions d'application: adaptabilité aux formes complexes des substrats de type 3D,
- temps d'utilisation restreints afin de faire face à des cycles de fabrication importants,
- esthétisme et poids léger du revêtement final pour ne pas augmenter la consommation en carburant des aéronefs tout en répondant aux attentes des sociétés exploitantes.

Il serait donc intéressant de pouvoir contrôler plus finement et localement la température de la peau d'avion; substrat de l'application de revêtements; ainsi que l'air (pollution, hygrométrie et température) en proximité d'application et/ou de séchage, sur l'ensemble des étapes de formation de la gamme de revêtements des pièces et cellules d'un aéronef.

La présente invention vise à pallier les divers inconvénients ci-dessus exposés en proposant un procédé et un ensemble de conditionnement de la surface d'un aéronef particulièrement simple dans leur conception et dans leur mode opératoire, fiables et rapides, et garantissant une qualité optimale de la surface ainsi conditionnée.

Un autre objet de la présente invention est un procédé de conditionnement empêchant d'éventuelles dégradations des portions de la surface d'un objet déjà traitées, notamment par des projections de peinture ou rebus.

Le document US2013243963 A1 décrit un procédé suivant le préambule de la revendication 1 ainsi qu'un ensemble selon le préambule de la revendication 10.

### BREVE DESCRIPTION DE L'INVENTION

A cet effet, l'invention concerne un procédé de conditionnement selon la revendication 1. A l'étape d), ledit au moins un revêtement peut être choisi dans le groupe comprenant un revêtement d'accrochage, un revêtement anti-corrosion, un revêtement de peinture, un vernis de protection et des combinaisons de ces éléments.
Dans différents modes de réalisation particuliers de cet ensemble, chacun ayant ses avantages particuliers et susceptibles de nombreuses combinaisons techniques possibles:
- on réalise les étapes supplémentaires consistant à ramener ladite jupe vers une position de repos où elle est placée à distance de ladite surface de l'objet, éloigner éventuellement ladite tête de conditionnement de ladite surface vers une zone de sécurité, déplacer ladite tête vers un nouveau point de référence et répéter les étapes a) à d),
- l'extrémité libre de ladite jupe est déplaçable entre une position de repos où elle est placée à distance de la surface dudit objet et une position déployée où elle est en contact avec la surface dudit objet, ladite jupe étant pourvue à son extrémité libre destinée à venir en contact avec ladite surface d'au moins une bande souple.
La mise en oeuvre de cette bande souple à l'extrémité de la jupe permet d'éviter toute dégradation de la surface de l'objet à revêtir lors de la mise en contact de la jupe et de cette surface. Cette bande souple peut, à titre purement illustratif, être réalisée en matière plastique élastomérique.
- ladite zone de travail présente la forme d'un cercle, d'une ellipse ou d'un polygone, de préférence centré sur ledit point de référence.
A titre d'exemple, il peut ainsi s'agir d'un cercle de rayon R centré sur le point de référence. Il peut encore s'agir d'un polygone régulier.
De préférence, on introduit ledit au moins un flux de sorte à donner un mouvement hélicoïdal axial audit au moins un flux dans l'espace délimité par ladite jupe.
Avantageusement, ladite tête de conditionnement projetant un liquide tel que des gouttelettes de peinture, sur ladite zone de travail, les flux introduits présentent un même sens horaire d'écoulement de manière à former localement un écran pour bloquer d'éventuelles projections générées lors du contact dudit liquide avec ladite surface de l'objet.
On peut également aspirer ledit au moins un flux d'air après son contact avec ladite zone de travail. On s'assure ainsi avantageusement de l'aspiration des poussières ou particules générées lors du conditionnement dans le volume clos délimité par la jupe et la surface de l'objet à conditionner. A titre illustratif, dans le cas d'une étape de peinture, les gouttelettes de peinture rebondissant à la surface de l'objet sont emmenées par le flux d'air chaud ayant rencontré cette surface et aspirées avant qu'elles ne puissent se redéposer. On évite ainsi l'apparition de rebus.
On peut également mesurer la température à la surface dudit objet et/ou dans ledit volume ainsi délimité au moyen de sondes thermiques et réguler la température dudit au moins un flux d'air chaud en utilisant les mesures en température.
On s'assure ainsi d'une température locale de la surface de l'objet à conditionner qui est optimale lors du conditionnement de la surface.
- ladite jupe formant un écran opaque aux rayons UV ou IR, on expose ladite zone locale de travail à des rayons UV ou IR pour accélérer le traitement de séchage ou de cuisson de ladite surface.
Le confinement assuré par cet écran autorise la mise en oeuvre de rayonnements compatibles de séchages accélérés (UV, IR...).

L'invention concerne encore un ensemble selon la revendication 10. De préférence, cette jupe comporte une structure télescopique pour assurer son déploiement. Son caractère télescopique permet avantageusement une adaptation à toutes les singularités de surfaces dans les trois dimensions.

De manière avantageuse, ladite jupe est pourvue à son extrémité libre destinée à venir en contact avec ladite surface d'au moins une bande souple de manière à ne pas détériorer la surface de l'objet à conditionner.

Selon un mode de réalisation particulier, cette tête de conditionnement et cette jupe peuvent être montées à l'extrémité d'un mât articulé monté sur un support tournant d'un châssis motorisé.

Ledit au moins un outil est choisi dans le groupe comprenant un moyen de projection de peinture, un moyen pour appliquer ladite peinture ou encore une source de rayons UV ou IR.

Le moyen pour générer au moins un flux d'air chaud peut générer un flux d'air chaud pulsé ou non.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 est une vue partielle et en coupe longitudinale d'un ensemble de conditionnement selon un mode de réalisation particulier de la présente invention,
- la figure 2 est une vue avant de l'ensemble de la Fig. 1 ;

### DESCRIPTION DETAILLEE DE MODES DE REALISATION DE L'INVENTION

On notera tout d'abord que les figures ne sont pas à l'échelle.

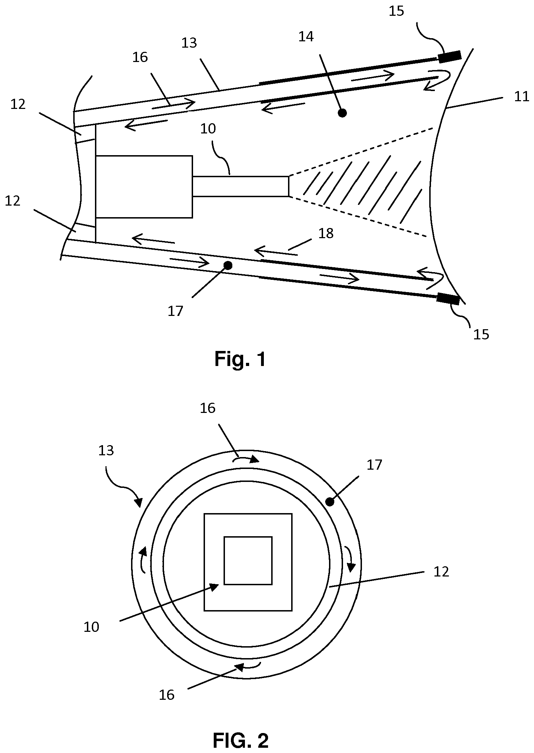

Les figures 1 et 2 montrent partiellement un ensemble de mise en peinture de la surface d'un avion selon un mode de réalisation préféré de l'invention.

Cet ensemble comprend un bloc de conditionnement placé à l'extrémité d'un mât articulé monté sur un support tournant d'un châssis motorisé (non représentés). Le pivotement de chaque partie du mât est assuré par des vérins hydrauliques (non représentés).

Ce bloc de conditionnement comporte une tête de conditionnement comprenant un outil 10 pour déposer un revêtement sur la surface 11 de l'avion à revêtir ainsi qu'un dispositif d'aspiration 12 entourant cet outil 10.

Le bloc comporte également une enceinte 13 déployable entourant cette tête de conditionnement et dont l'extrémité libre peut ainsi être déplacée entre une position de repos où elle est placée à distance de la surface 11 de l'avion à peindre et une position déployée où elle est en contact avec la surface 11 de cet avion.

Cette enceinte 13 une fois déployée délimite ici une zone de travail circulaire à la surface 11 de l'avion ainsi qu'un volume 14 clos délimité d'une part par cette enceinte 13 et la surface 11 de l'avion, et d'autre part par ladite enceinte 13 et la tête de conditionnement.

La zone de contact de l'extrémité libre de l'enceinte 13 avec la surface 11 de l'avion a été spécifiquement étudiée. L'enceinte 13 comporte un volet 15 en élastomère de section de forme circulaire, placé à son extrémité libre, ce volet 15 souple ne détériorant pas la surface en contact à peindre.

En outre, des capteurs de force (non représentés) permettent d'asservir en position le système de déploiement de l'enceinte 13 et de garantir ainsi la non dégradation de la surface 11 à revêtir par une validation permanente de la distance bloc de conditionnement/substrat. Ce système de déploiement comporte ici des bras télescopiques.

Le bloc de conditionnement comporte encore un dispositif d'injection d'air permettant de garantir l'homogénéisation des conditions de températures et humidité relative de la peau de l'avion à revêtir.

La forme du dispositif et notamment les zones d'injection d'air assurent une canalisation du flux 16 d'air garantissant l'absence de rebus. Ici, l'enceinte 13 comprend une double paroi délimitant un canal annulaire 17 pour le passage du flux 16 d'air chaud. Ce dernier est donc mis en forme pour définir un écoulement de section de forme annulaire à la surface 11 de l'avion.

Cette mise en forme permet non seulement d'obtenir une vitesse de flux 16 d'air importante sans perturber la zone d'application du substrat, mais également d'établir des conditions homogènes autour de la zone d'application du substrat. La vitesse typique du flux 16 d'air en sortie de buse est de l'ordre de quelques m/s à quelques dizaines de m/s, par exemple compris entre 5 et 50 m/s.

Le dispositif d'injection assurera un taux de renouvellement d'air dans le volume 14 clos nécessaire à l'ensemble des opérations, ce taux pouvant être variable. Bien entendu, le bloc de conditionnement comporte un système de chauffage du flux 16 d'air et de maintien en température, ainsi qu'un système de contrôle et de maintien du taux d'hygrométrie de l'air (non représentés).

Ce bloc de conditionnement comporte aussi une caméra, lasers ou autres capteurs de forme et distance (non représentés) reliés à une unité centrale traitant en temps réel les informations envoyées par celle-ci pour positionner l'ensemble face à la surface de l'objet à revêtir, et notamment en face de chaque point de référence prédéfini.

L'ensemble comporte également des capteurs tels que des thermocouples, pour mesurer la température à la surface 11 de l'avion et/ou dans le volume 14 clos afin de permettre un contrôle en température et en humidité relative.

Par exemple, la température de la surface 11 à revêtir pourra ainsi être contrôlée par l'intermédiaire de thermocouples en 4 à 8 points de la périphérie. Ces mesures conditionneront le fonctionnement ou non de l'outil 10 permettant le conditionnement de surface.

En alternative à cette solution de gestion thermique, des thermocouples pourront être installés, par exemple sur la paroi interne de l'enceinte 13, afin de mesurer le flux 18 d'air de retour, c'est-à-dire le flux 18 d'air qui se propage vers le dispositif d'aspiration 12 après avoir été en contact avec la surface 11 de l'avion à revêtir. Sur la base des volumes et température d'air injecté, ce procédé de gestion pourra permettre d'assurer une gestion thermique plus robuste.

D'autre part, une base de données de cycles de soufflages garantissant la température de la surface 11 de l'avion à revêtir pourra être préalablement établie en fonction des conditions environnementales (température extérieure, nature des substrats...). Dans ce cas, et sur la base de marges et tolérances suffisantes, le contrôle thermique ne sera pas nécessaire.

Le conditionnement de surface est réalisé uniquement si l'ensemble des paramètres opérationnels sont valides.

La vitesse de défilement de l'outil 10 est conditionnée pour répondre à la qualité requise et mise au point au préalable. Elle dépend de la nature du substrat, du revêtement et est établi au préalable par une étude procédé qui permet de figer ces paramètres en fonction de la nature du revêtement.
Dans l'objectif de garantir une température minimum de la surface de l'objet à revêtir au cours de l'application, l'ensemble comporte un dispositif de séchage accéléré tel qu'une source de rayonnement infrarouge ou ultraviolet. Ce dispositif de séchage (non représenté) est avantageusement combiné à une enceinte 13 opaque à ce rayonnement ou dans des longueurs d'ondes acceptables pour l'oeil humain, laquelle tiendra alors lieu d'écran de protection vis-à-vis des rayonnements.
Pour les cas d'applications à plus haute température que les conditions CNTP, le revêtement (encres, dépôts céramiques...) sera développé pour être applicable jusqu'à 80°C.

De préférence, l'air pollué au cours d'une des étapes de la gamme de revêtements (dégraissage, activation de surface, application séchage, contrôle...) est retraité par une ou plusieurs unités de filtrage (non représentées) et réutilisé en circuit fermé comme air chaud destiné à être dirigé vers la surface 11 de l'avion à revêtir. Ceci assure un gain environnemental et évite de réchauffer en permanence l'air au sein de l'enceinte 13, conduisant ainsi à des gains en consommation d'énergie.

Pour réduire encore la consommation en énergie, l'ensemble pourra comporter un échangeur d'air.

## Revendications

1. Procédé de conditionnement d'au moins une partie de la surface (11) d'un objet tel qu'un aéronef, au moyen d'une tête de conditionnement, comprenant les étapes suivantes :
a) placer ladite tête de conditionnement à distance de la surface (11) de l'objet en regard d'un point de référence prédéfini de ladite surface,
b) délimiter une zone locale de travail sur ladite surface (11) de l'objet en amenant en contact une extrémité libre d'une jupe (13) avec la surface dudit objet, ladite jupe (13) entourant au moins en partie ladite tête, ladite zone locale de travail comportant ledit point de référence,
c) contrôler au moins la température et/ou l'hygrométrie dans le volume délimité d'une part par ladite jupe (13) et ladite zone locale de travail ainsi délimitée, et d'autre part par ladite jupe (13) et ladite tête de conditionnement,
d) déposer au moins un revêtement à la surface dudit objet dans ladite zone locale de travail, la procédé étant **caractérisé en ce qu'**à l'étape c), on génère au moins un flux (16) d'air chaud à degré d'hygrométrie contrôlé, lequel est mis en forme pour former un écoulement de section de forme annulaire dirigé en périphérie de la zone de travail de sorte à ne pas perturber les opérations de ladite tête de conditionnement.

2. Procédé selon la revendication 1, **caractérisé en ce qu'**on réalise les étapes supplémentaires consistant à ramener ladite jupe (13) vers une position de repos où elle est placée à distance de ladite surface (11) de l'objet, éloigner éventuellement ladite tête de conditionnement de ladite surface vers une zone de sécurité, déplacer ladite tête vers un nouveau point de référence et répéter les étapes a) à d).

3. Procédé selon la revendication 1 ou 2, **caractérisé en ce que** l'extrémité libre de ladite jupe (13) est déplaçable entre une position de repos où elle est placée à distance de la surface dudit objet et une position déployée où elle est en contact avec la surface dudit objet, ladite jupe (13) étant pourvue à son extrémité libre destinée à venir en contact avec ladite surface d'au moins une bande souple.

4. Procédé selon l'une quelconque des revendications 1 à 3, **caractérisé en ce que** ladite zone de travail présente la forme d'un cercle, d'une ellipse ou d'un polygone.

5. Procédé selon la revendication 1, **caractérisé en ce qu'**on introduit ledit au moins un flux (16) d'air de sorte à donner un mouvement hélicoïdal axial audit au moins un flux dans l'espace délimité par ladite jupe (13).

6. Procédé selon la revendication 5, **caractérisé en ce que** ladite tête de conditionnement projetant un liquide sur ladite zone de travail, lesdits flux (16) présentent un même sens horaire d'écoulement de manière à former un écran pour bloquer d'éventuelles projections générées lors du contact dudit liquide avec ladite surface (11) de l'objet.

7. Procédé selon l'une quelconque des revendications 1 à 6, **caractérisé en ce qu'**on aspire ledit au moins un flux (16) d'air après son contact avec ladite zone de travail.

8. Procédé selon l'une quelconque des revendications 1 à 7, **caractérisé en ce qu'**on mesure la température à la surface dudit objet et/ou dans ledit volume ainsi délimité au moyen de sondes thermiques et **en ce qu'**on régule la température dudit au moins un flux (16) d'air chaud en utilisant les mesures en température.

9. Procédé selon l'une quelconque des revendications 1 à 8, **caractérisé en ce que** ladite jupe (13) formant un écran aux rayons UV ou IR, on expose ladite zone locale de travail à des rayons UV ou IR pour accélérer le traitement de séchage ou de cuisson de ladite surface.

10. Ensemble pour la mise en oeuvre du procédé de conditionnement, notamment pour peindre des surfaces d'objets, selon l'une quelconque des revendications 1 à 9, comprenant :
- une tête de conditionnement comprenant au moins un outil (10) de conditionnement, amovible ou non, et un dispositif d'aspiration (12) entourant ledit au moins un outil (10),
- une jupe (13) entourant ladite tête de conditionnement et dont l'extrémité libre est déplaçable entre une position de repos où elle est placée à distance de la surface dudit objet et une position déployée où elle est en contact avec la surface dudit objet à conditionner,
- un moyen pour générer au moins un flux (16) d'air chaud à degré d'hygrométrie contrôlée dans le volume (14) clos délimité d'une part par ladite jupe (13) et la surface dudit objet, et d'autre part par ladite jupe (13) et ladite tête de conditionnement, et
- ledit dispositif d'aspiration (12) permettant d'aspirer ledit au moins un flux (16) d'air chaud dans ledit volume (14) clos après que ledit au moins un flux (16) d'air chaud ait été en contact avec la surface dudit objet ; l'ensemble étant **caractérisé en ce que** ladite jupe (13) comprend une double paroi délimitant un canal annulaire (17) pour le passage dudit flux (16) d'air chaud.

11. Ensemble selon la revendication 10, **caractérisé en ce que** ladite jupe (13) comporte une structure télescopique.

12. Ensemble selon l'une quelconque des revendications 10 à 11, **caractérisé en ce que** ladite tête de conditionnement et ladite jupe (13) sont montées à l'extrémité d'un mât articulé monté sur un support tournant d'un châssis motorisé.

13. Ensemble selon l'une quelconque des revendications 10 à 12, **caractérisé en ce que** ledit au moins un outil (10) est choisi dans le groupe comprenant un moyen de projection de peinture, un moyen pour appliquer ladite peinture ou encore une source de rayons UV ou IR.

## Patentansprüche

1. Verfahren zur Aufbereitung wenigstens eines Teils der Oberfläche (11) eines Gegenstands wie etwa eines Flugzeugs mittels eines Aufbereitungskopfes, welches die folgenden Schritte umfasst:
a) Anordnen des Aufbereitungskopfes in einem Abstand von der Oberfläche (11) des Gegenstands gegenüber einem vordefinierten Referenzpunkt der Oberfläche,
b) Begrenzen eines lokalen Arbeitsbereichs auf der Oberfläche (11) des Gegenstands durch Inkontaktbringen eines freien Endes einer Schürze (13) mit der Oberfläche des Gegenstands, wobei die Schürze (13) den Kopf wenigstens teilweise umgibt, wobei der lokale Arbeitsbereich den Referenzpunkt umfasst,
c) Regeln wenigstens der Temperatur und/oder der Luftfeuchtigkeit in dem Volumen, das einerseits von der Schürze (13) und dem so begrenzten lokalen Arbeitsbereich und andererseits von der Schürze (13) und dem Aufbereitungskopf begrenzt wird,
d) Aufbringen wenigstens einer Beschichtung auf die Oberfläche des Gegenstands in dem lokalen Arbeitsbereich,
wobei das Verfahren **dadurch gekennzeichnet ist, dass** im Schritt c) wenigstens ein Heißluftstrom (16) mit geregeltem Feuchtigkeitsgrad erzeugt wird, dem eine solche Form verliehen wird, dass er eine Strömung mit ringförmigem Querschnitt bildet, die entlang des Umfangs des Arbeitsbereichs geleitet wird, derart, dass sie die Arbeit des Aufbereitungskopfes nicht beeinträchtigt.

2. Verfahren nach Anspruch 1, **dadurch gekennzeichnet, dass** die zusätzlichen Schritte durchgeführt werden, die darin bestehen, die Schürze (13) in eine Ruheposition zu bringen, in der sie in einem Abstand von der Oberfläche (11) des Gegenstands angeordnet ist, gegebenenfalls den Aufbereitungskopf von der Oberfläche in einen Sicherheitsbereich zu entfernen, den Kopf zu einem neuen Referenzpunkt hin zu verlagern und die Schritte a) bis d) zu wiederholen.

3. Verfahren nach Anspruch 1 oder 2, **dadurch gekennzeichnet, dass** das freie Ende der Schürze (13) zwischen einer Ruheposition, in der es in einem Abstand von der Oberfläche des Gegenstands angeordnet ist, und einer ausgefahrenen Position, in der es sich in Kontakt mit der Oberfläche des Gegenstands befindet, verlagerbar ist, wobei die Schürze (13) an ihrem freien Ende, das dazu bestimmt ist, mit der Oberfläche in Kontakt zu kommen, mit wenigstens einem flexiblen Band versehen ist.

4. Verfahren nach einem der Ansprüche 1 bis 3, **dadurch gekennzeichnet, dass** der Arbeitsbereich die Form eines Kreises, einer Ellipse oder eines Vielecks aufweist.

5. Verfahren nach Anspruch 1, **dadurch gekennzeichnet, dass** der wenigstens eine Luftstrom (16) derart eingeleitet wird, dass dem wenigstens einen Strom in dem von der Schürze (13) begrenzten Raum eine axiale spiralförmige Bewegung verliehen wird.

6. Verfahren nach Anspruch 5, **dadurch gekennzeichnet, dass**, wenn der Aufbereitungskopf eine Flüssigkeit auf den Arbeitsbereich spritzt, die Ströme (16) ein und denselben Strömungsdrehsinn aufweisen, derart, dass sie einen Schirm bilden, um eventuelle Spritzer abzuwehren, die beim Kontakt der Flüssigkeit mit der Oberfläche (11) des Gegenstands erzeugt werden.

7. Verfahren nach einem der Ansprüche 1 bis 6, **dadurch gekennzeichnet, dass** der wenigstens eine Luftstrom (16) nach seinem Kontakt mit dem Arbeitsbereich abgesaugt wird.

8. Verfahren nach einem der Ansprüche 1 bis 7, **dadurch gekennzeichnet, dass** die Temperatur an der Oberfläche des Gegenstands und/oder in dem so begrenzten Volumen mithilfe von Temperaturfühlern gemessen wird, und dadurch, dass die Temperatur des wenigstens einen Heißluftstroms (16) unter Verwendung der Temperaturmessungen geregelt wird.

9. Verfahren nach einem der Ansprüche 1 bis 8, **dadurch gekennzeichnet, dass**, wenn die Schürze (13) einen Schirm für die UV- oder IR-Strahlen bildet, der lokale Arbeitsbereich UV- oder IR-Strahlen ausgesetzt wird, um die Trocknungs- oder Brennbehandlung der Oberfläche zu beschleunigen.

10. Anordnung zur Durchführung des Verfahrens zur Aufbereitung, insbesondere zum Lackieren der Oberfläche von Gegenständen, nach einem der Ansprüche 1 bis 9, welche umfasst:
- einen Aufbereitungskopf, der wenigstens ein lösbares oder nicht lösbares Aufbereitungswerkzeug (10) und eine Absaugvorrichtung (12), die das wenigstens eine Werkzeug (10) umgibt, umfasst,
- eine Schürze (13), die den Aufbereitungskopf umgibt und deren freies Ende zwischen einer Ruheposition, in der es in einem Abstand von der Oberfläche des Gegenstands angeordnet ist, und einer ausgefahrenen Position, in der es sich in Kontakt mit der Oberfläche des aufzubereitenden Gegenstands befindet, verlagerbar ist,
- ein Mittel zum Erzeugen wenigstens eines Heißluftstroms (16) mit geregeltem Feuchtigkeitsgrad in dem geschlossenen Volumen (14), das einerseits von der Schürze (13) und der Oberfläche des Gegenstands und andererseits von der Schürze (13) und dem Aufbereitungskopf begrenzt wird, und
- wobei die Absaugvorrichtung (12) ermöglicht, den wenigstens einen Heißluftstrom (16) in dem geschlossenen Volumen (14) abzusaugen, nachdem der wenigstens eine Heißluftstrom (16) mit der Oberfläche des Gegenstands in Kontakt war;
wobei die Anordnung **dadurch gekennzeichnet ist, dass** die Schürze (13) eine doppelte Wand umfasst, die einen ringförmigen Kanal (17) für das Hindurchströmen des Heißluftstroms (16) begrenzt.

11. Anordnung nach Anspruch 10, **dadurch gekennzeichnet, dass** die Schürze (13) eine teleskopische Struktur aufweist.

12. Anordnung nach einem der Ansprüche 10 bis 11, **dadurch gekennzeichnet, dass** der Aufbereitungskopf und die Schürze (13) am Ende eines Gelenkmastes angebracht sind, der auf einem rotierenden Träger eines motorisierten Gestells angebracht ist.

13. Anordnung nach einem der Ansprüche 10 bis 12, **dadurch gekennzeichnet, dass** wenigstens ein Werkzeug (10) aus der Gruppe ausgewählt ist, die ein Mittel zum Spritzen von Farbe, ein Mittel zum Auftragen der Farbe oder auch eine Quelle von UV- oder IR-Strahlen umfasst.

## Claims

1. Method for conditioning at least part of the surface (11) of an object such as an aircraft by means of a conditioning head, comprising the following steps:
a) placing the said conditioning head at a distance from the surface (11) of the object so as to face a predefined reference point of the said surface,
b) delimiting a local work zone on the said surface (11) of the object by bringing a free end of a skirt (13) into contact with the surface of the said object, the said skirt (13) surrounding the said head at least in part, the said local work zone comprising the said reference point,
c) controlling at least the temperature and/or hygrometry in the volume delimited, on the one hand, by the said skirt (13) and the said local work zone thus delimited and, on the other hand, by the said skirt (13) and the said conditioning head,
d) depositing at least one coating on the surface of the said object in the said local work zone,
the method being **characterized**
**in that** in the step c), at least one hot air flow (16) with a controlled hygrometry degree is generated, which flow is shaped to form a flow of annularly shaped cross section directed at the periphery of the work zone so as not to disturb the operations of the said conditioning head.

2. Method according to Claim 1, **characterized in that** there are carried out the additional steps consisting in returning the said skirt (13) towards a rest position where it is placed at a distance from the said surface (11) of the object, optionally moving the said conditioning head away from the said surface towards a safety zone, moving the said head towards a new reference point and repeating the steps a) to d).

3. Method according to Claim 1 or 2, **characterized in that** the free end of the said skirt (13) is movable between a rest position where it is placed at a distance from the surface of the said object and a deployed position where it is in contact with the surface of the said object, the said skirt (13) being provided with at least one flexible band at its free end intended to come into contact with the said surface.

4. Method according to any one of Claims 1 to 3, **characterized in that** the said work zone has the form of a circle, an ellipse or a polygon.

5. Method according to Claim 1, **characterized in that** the said at least one air flow (16) is introduced so as to give an axial helical movement to the said at least one flow in the space delimited by the said skirt (13).

6. Method according to Claim 5, **characterized in that**, with the said conditioning head projecting a liquid onto the said work zone, the said flows (16) have the same clockwise flow direction so as to form a screen for blocking any projections generated during contact of the said liquid with the said surface (11) of the object.

7. Method according to any one of Claims 1 to 6, **characterized in that** the said at least one air flow (16) is sucked up after its contact with the said work zone.

8. Method according to any one of Claims 1 to 7, **characterized in that** the temperature at the surface of the said object and/or in the said volume thus delimited is measured by means of thermal probes, and **in that** the temperature of the said at least one hot air flow (16) is regulated using the temperature measurements.

9. Method according to any one of Claims 1 to 8, **characterized in that**, with the said skirt (13) forming a screen to UV or IR rays, the said local work zone is exposed to UV or IR rays to accelerate the drying or curing treatment of the said surface.

10. Assembly for implementing the conditioning method, in particular for painting surfaces of objects, according to any one of Claims 1 to 9, comprising:
- a conditioning head comprising at least one conditioning tool (10), which may or may not be removable, and a suction device (12) surrounding said at least one tool (10),
- a skirt (13) surrounding the said conditioning head and the free end of which is movable between a rest position where it is placed at a distance from the surface of the said object and a deployed position where it is in contact with the surface of the said object to be conditioned,
- a means for generating at least one hot air flow (16) with a controlled hygrometry degree in the closed volume (14) delimited, on the one hand, by the said skirt (13) and the surface of the said object and, on the other hand, by the said skirt (13) and the said conditioning head, and
- the said suction device (12) making it possible to suck up the said at least one hot air flow (16) into the said closed volume (14) after the said at least one hot air flow (16) has been in contact with the surface of the said object;
the assembly being **characterized**
**in that** the said skirt (13) comprises a double wall delimiting an annular duct (17) for the passage of the said hot air flow (16).

11. Assembly according to Claim 10, **characterized in that** the said skirt (13) comprises a telescopic structure.

12. Assembly according to either one of Claims 10 and 11, **characterized in that** the said conditioning head and the said skirt (13) are mounted at the end of an articulated mast mounted on a rotating support of a motorized chassis.

13. Assembly according to any one of Claims 10 to 12, **characterized in that** the said at least one tool (10) is chosen from the group comprising a paint projection means, a means for applying the said paint or a source of UV or IR rays.
